# EUROPÄISCHE PATENTSCHRIFT

(11) **EP 1 500 638 B1**
(45) Veröffentlichungstag und Bekanntmachung des Hinweises auf die Patenterteilung: **07.05.2008**
(21) Anmeldenummer: 03405554.1
(22) Anmeldetag: 21.07.2003
(51) Int. Cl.: C04B 41/88, H01C 7/108

(54) **Laserbestrahlte metallisierte Elektrokeramik**
Laser irradiated metallised electroceramic
Electrocéramique métallisée traitée par irradiation laser

(43) Veröffentlichungstag der Anmeldung: 26.01.2005
(73) Patentinhaber: ABB RESEARCH LTD., 8050 Zürich (CH)
(72) Erfinder: Kessler, Reto, 8004 Zürich (CH); Greuter, Felix, 5406 Rütihof (CH); Hagemeister, Michael, 8006 Zürich (CH)
(74) Vertreter: ABB Patent Attorneys

(56) Entgegenhaltungen:
- DE-A- 4 113 263
- US-A- 4 663 826

## Beschreibung

### Technisches Gebiet

Die Erfindung bezieht sich auf das Gebiet der Elektrotechnik, insbesondere auf elektrokeramische Bauteile, wie zum Beispiel Varistoren. Sie bezieht sich auf ein Verfahren zur Herstellung eines elektrokeramischen Bauteils gemäss dem Oberbegriff des Patentanspruches 1.

### Stand der Technik

Elektrokeramische Bauteile sind keramische Bauteile, die elektrisch kontaktierbar und mit einer elektrischen Spannung beaufschlagbar sind, um eine elektrische, elektromechanische oder sonstige Funktion zu erfüllen. Ihr wesentlicher Bestandteil ist eine Elektrokeramik. Beispiele für elektrokeramische Bauteile sind Hochtemperatursupraleiterbauteile, piezokristalline Bauteile, keramische Kondensatoren, Heiss- und Kaltleiter, keramische Widerstände, keramische Gassensoren und Varistoren. Auf letztere wird im folgenden genauer eingegangen.

Varistoren sind elektrokeramische Bauteile mit einer nichtlinearen Strom-Spannungskennlinie, die vor allem als Ableiter in Mittelspannungs-Hochspannungs-, aber auch Niederspannungsbereich eingesetzt werden. Es werden vorwiegend Metalloxid-Varistoren eingesetzt, die auf gesinterten Varistorkeramiken, beispielsweise auf der Grundlage von dotiertem ZnO, basieren. Zur Kontaktierung werden solche und andere Elektrokeramiken im allgemeinen mit zwei (oder mehr) metallischen Elektroden versehen, wobei die Kontakte einen geringen Übergangswiderstand und eine hohe Stromtragfähigkeit aufweisen müssen. Zudem bedarf es einer starken Haftung der Metallschicht auf der Keramikoberfläche, um einen sicheren und mechanisch stabilen Kontakt zu gewährleisten.

In US 4 663 826 wird ein Verfahren beschrieben, bei dem leitende Bereiche auf Perowskitkeramiken erzeugt werden, indem in einer reduzierten Atmosphäre das Material getempert oder gesintert wird und mittels Laserlicht bestrahlt wird. Unter Zuhilfenahme eines fokussierten Laserstrahls können leitfähige streifenförmige Bereiche erzeugt werden. Durch Zusetzen von metallorganischen gasförmigen Verbindungen zur reduzierenden Atmosphäre kann während der Laserbestrahlung eine Metallabscheidung erreicht werden.

In US 6'169'038 ist ein Verfahren zur Aufrauhung einer Oberfläche eines Halbleiters offenbart, in welchem die Oberfläche mit einer Säure geätzt wird. Durch den Ätzprozess kann eine Mikrorauhigkeit der Oberfläche erzeugt werden. Wird eine solcherart aufgerauhte Oberfläche mit einer Metallisierung versehen, so ergibt sich aufgrund der Mikrorauhigkeit eine starke Verzahnung zwischen dem Halbleiter und der Metallschicht, so dass eine gute Haftung zwischen der Metallschicht und der Halbleiteroberfläche erreicht wird. Ähnliche Ätzverfahren finden bei der Herstellung von Varistoren und anderen elektrokeramischen Bauteilen Anwendung.

Bei derartigen Ätzverfahren fallen zu entsorgende chemische Abfälle an, und bei der Durchführung solcher Verfahren müssen aufgrund der Gefährlichkeit der eingesetzten Chemikalien aufwendige Sicherheitsmassnahmen getroffen werden.

### Darstellung der Erfindung

Es ist deshalb Aufgabe der Erfindung, ein Verfahren der eingangs genannten Art zu schaffen, welches die oben genannten Nachteile nicht aufweist. Durch das erfindungsgemässe Verfahren soll insbesondere eine sichere und umweltfreundliche Metallisierung einer Elektrokeramik ermöglicht werden.

Diese Aufgabe löst ein Verfahren mit den Merkmalen des Patentanspruches 1.

Weiter wird in Patentanspruch 17 eine Verwendung von Laserlicht beansprucht.

In dem erfindungsgemässen Verfahren zur Herstellung eines elektrokeramischen Bauteils wird auf mindestens einen Oberflächenteil eines gesinterten Elektrokeramikkörpers eine Metallisierung aufgebracht. Das Verfahren kennzeichnet sich dadurch, dass vor dem Aufbringen der Metallisierung der Oberflächenteil mit Laserlicht bestrahlt wird.

Dadurch können andere Verfahren zur Bearbeitung des Oberflächenteils, wie Ätzen, Schleifen, Sandstrahlen oder spanabhebende Verfahren durch die Bestrahlung mittels Laserlichtes ersetzt werden, welches ein umweltfreundliches und schnelles Verfahren ist. Zudem ist durch die Laserbestrahlung eine besonders vorteilhafte Beschaffenheit des Oberflächenteils erzeugbar.

Ein weiterer, bedeutender Vorteil der Laserbestrahlung ist es, dass die Form des (zu metallisierenden) Oberflächenteils auf einfache Weise und praktisch beliebig wählbar ist. Bei nasschemischen Verfahren beispielsweise müssen Masken an dem Elektrokeramikkörper angebracht werden, um Teile der Oberfläche des Elektrokeramikkörpers von der Behandlung auszuschliessen. Bei der Laserbestrahlung kann der Laserstrahl einfach so gesteuert werden, dass nur der zu metallisierende Oberflächenteil bestrahlt wird. So können auf einfache Weise Metallisierungen (Elektroden) erzeugt werden, die eine definierte Fläche, einen definierten Teil, des Elektrokeramikkörpers bedecken.

Insbesondere wenn durch die Laserbehandlung die Haftung der Metallisierung auf dem Elektrokeramikkörper erhöht wird, können wohldefinierte Elektrodenformen insbesondere auch mit Metallisierungsverfahren erzeugt werden, die - zumindest ohne einen Einsatz von Masken - keine gut auf einen begrenzten Oberflächenbereich eingrenzbare Metallisierung erlauben (zum Beispiel Metallabscheidung aus der Gasphase oder elektrochemische Metallabscheidung). In den nicht laserbestrahlten Oberflächenbereichen ist die Haftung des abgeschiedenen Metalls dann geringer als auf dem Oberflächenteil, so dass das Metall dort einfach von dem Elektrokeramikkörper entfernbar ist, beispielsweise durch Bürsten. Oder die Haftung des Metalls auf den nicht laserbestrahlten Oberflächenbereichen ist so gering, dass dort keine Abscheidung, also keine Metallisierung stattfindet.

Insbesondere wenn der Elektrokeramikkörper zwei Aussenflächen aufweist, die durch mindestens eine Kante voneinander getrennt sind, wobei jede dieser zwei Aussenflächen mit mindestens einer Metallisierung (Elektrode) zu versehen ist, und wobei vorgesehen ist, dass zwischen diesen zwei Elektroden eine Spannung angelegt wird, ist die einfache Erzeugbarkeit von definierten zu metallisierenden Oberflächenteilen vorteilhaft. Dann kann nämlich zumindest einer der Oberflächenteile so gewählt werden (und metallisiert werden), dass er zu der Kante beabstandet ist. Es gibt dann mindestens einen zwischen der Kante und dem Oberflächenteil angeordneten Rand. Auf diese Weise wird die Wahrscheinlichkeit eines elektrischen Überschlags von der einen zu der anderen Elektrode verringert gegenüber dem Fall, dass die Metallisierung sich bis an die Kante erstreckte. Bevorzugt weisen beide Metallisierungen (Elektroden) einen Rand auf.

Eine weitere Verbesserung der Überschlagsfestigkeit wird erreicht, wenn durch die Laserbestrahlung in dem Oberflächenteil Material der Elektrokeramik abgetragen wird, und wenn der Elektrokeramikkörper nach der Laserbestrahlung einen an den Oberflächenteil angrenzenden Rand aufweist, welcher Rand nicht oder weniger als der Oberflächenteil mit dem Laserlicht bestrahlt wird. Nach der Laserbestrahlung grenzt dann also ein nicht (oder weniger) laserbestrahlter Rand an den Oberflächenteil an, welcher gegenüber dem Oberflächenteil erhaben ist. Der Rand überragt den Oberflächenteil und kann die Wahrscheinlichkeit von elektrischen Überschlägen über den Rand hinweg verringern, insbesondere wenn die Metallisierung auch von dem Rand überragt wird.

Gegenüber anderen Verfahren zur Vorbereitung des Oberflächenteils für die Metallisierung kann die Laserbestrahlung den Vorteil haben, dass auf einfache Weise nicht nur ebene (planare), sondern auch gekrümmte Flächen bearbeitet werden können, beispielsweise eine Fläche auf einem Zylindermantel.

Besonders vorteilhaft kann der Oberflächenteil zur Aufrauhung des Oberflächenteils mit dem Laserlicht bestrahlt werden. Eine solche Aufrauhung dient einer besonders guten Verankerung der Metallisierung auf dem Elektrokeramikkörper. Derartig erzielte Rauhigkeiten weisen laterale Ausdehnungen von typischerweise zwischen 0.1 µm und 50 µm, meist zwischen 2 µm und 20 µm, und vertikale Ausdehnungen von typischerweise zwischen 0.1 µm und 10 µm, meist zwischen 0.3 µm und 5 µm, auf. Es kann eine besonders gute Haftung und Abzugsfestigkeit der Metallisierung erreicht werden. Eine erhöhte Rauhigkeit wird erreicht.

Mit Vorteil wird der Oberflächenteil vor dem Aufbringen der Metallisierung zur Verbesserung der Haftung der Metallisierung durch Modifikation der chemischen Beschaffenheit des Oberflächenteils mit dem Laserlicht bestrahlt. Ähnlich wie bei Ätzverfahren kann durch eine Laserbestrahlung die chemische Zusammensetzung der Oberfläche des Elektrokeramikkörpers verändert werden, beispielsweise durch Änderung der Stöchiometrie von Oxiden an der Oberfläche. Durch die modifizierte chemische Zusammensetzung des Oberflächenteils kann die Haftung der Metallisierung noch verbessert werden.

Mit grossem Vorteil kann der Oberflächenteil zur Vergrösserung der elektrischen Querleitfähigkeit des Oberflächenteils mit dem Laserlicht bestrahlt werden.

Die Oberfläche eines gesinterten Elektrokeramikkörpers hat zumeist im wesentlichen die gleichen elektrischen Eigenschaften wie das Volumen des gesinterten Elektrokeramikkörpers. Für einen geringen Kontaktwiderstand ist aber oftmals eine grössere Querleitfähigkeit wünschenswert. Die Querleitfähigkeit, welche sich aus dem Strom-Spannungs-Verhältnis im Falle zweier auf dem Oberflächenteil beabstandet angebrachten Elektroden ergibt, kann durch die Laserbestrahlung deutlich, insbesondere um mehrere Grössenordnungen verringert werden.

Im Falle eines Varistors liegt ein sehr grosser elektrischer Widerstand insbesondere bei Spannungen unterhalb der Schaltspannung des Varistors (Durchbruchspannung) vor. Die Querleitfähigkeit, welche sich aus dem Strom-Spannungs-Verhältnis im Falle zweier auf dem Oberflächenteil beabstandet angebrachten Elektroden ergibt, kann durch die Laserbestrahlung deutlich, insbesondere um mindestens eine oder zwei oder bis zu mindestens sieben bis neun Grössenordnungen verringert werden, abhängig von am Varistor anliegenden Spannung. Für die Querleitfähigkeit spielt nur ein dünner Oberflächenbereich eine Rolle.

Auf diese Weise wird ein geringer Übergangswiderstand von der Metallisierung zum Elektrokeramikkörper (Varistorkörper) erzielt. Die Elektrokeramik (der Varistor) weist dadurch günstigere elektrische Eigenschaften und eine verbesserte Kontaktierbarkeit auf. Der Kontaktwiderstand kann deutlich reduziert werden.

Meistens weist der Oberflächenteil nach dem Sintern des Keramikkörpers eine Welligkeit auf. Das heisst, dass der Oberflächenteil Deformationen aufweist. Derartige Welligkeiten oder Deformationen weisen laterale Ausdehnungen von typischerweise zwischen 50 µm und 30 mm, meist zwischen 100 µm und 10 mm, und vertikale Ausdehnungen von typischerweise zwischen 5 µm und 500 µm, meist zwischen 10 µm und 200 µm, auf. Durch die Bestrahlung mit dem Laserlicht vor dem Aufbringen der Metallisierung kann diese Welligkeit des Oberflächenteils verringert werden, das heisst, dass die vertikale Ausdehnung der Unebenheiten oder Welligkeiten verringert wird. Der Oberflächenteil wird geglättet.

Dadurch werden verbesserte elektrische und mechanische Eigenschaften des elektrokeramischen Bauteils erzielt, da eine homogenere Verteilung des elektrischen Feldes, des Stromflusses und mechanischer (Druck-) Belastungen erreicht wird.

Beispielsweise werden Varistoren oft unter grossem mechanischen Druck kontaktiert: Auf zwei vorteilhaft auf einander gegenüberliegenden Seiten des Varistors angeordnete Metallisierungen wird je eine Kontaktierungsplatte, typischerweise aus Aluminium, gepresst, um einen guten elektrischen Kontakt zu gewährleisten. Wenn die nun die Welligkeit (vor der Laserbestrahlung) gross ist, wird es einen mechanischen und elektrischen Kontakt zwischen Kontaktierungsplatte und Metallisierung nur an relativ wenigen und relativ weit beabstandeten Kontaktpunkten auf dem Oberflächenteil geben. Dadurch kommt es bei dem Anpressdruck der Konktaktierungsplatten zu einer sehr inhomogenen Krafteinleitung in den Varistorkörper (Elektrokeramikkörper). Ausserdem entstehen bei Stromstössen (Strompulsen) Druckstösse (mechanische Druckwellen) an den Kontaktpunkten, die umso grösser sind, je weniger Kontaktpunkte existieren. Und zudem führen Stromstösse zu lokaler Erwärmung an den Kontaktpunkten. Jedes der drei genannten Phänomene führt im allgemeinen rasch zur Ausbildung von Rissen in der Keramik. Die Risse sind meist oberflächennah und finden ihren Anfangspunkt im allgemeinen nahe den (wenigen) Kontaktpunkten. Solche Risse degradieren den elektrischen und mechanischen Kontakt zwischen Metallisierung und Keramik sowie den Varistorkörper. Wird die Keramik vor dem Aufbringen der Metallisierung in geeigneter Weise mit Laserlicht bestrahlt, so kann die Welligkeit (vor allem in ihrer vertikalen Dimension) deutlich verringert werden, so dass eine deutlich grössere Zahl und Dichte von Kontaktpunkten vorliegt. Entsprechend kann die Verwendung von Laserstrahlung zur Vorbehandlung einer Varistorkeramik / einer Elektrokeramik für das Aufbringen einer Metallisierung die Standzeit des Varistors / des elektrokeramischen Bauteils deutlich velängern. Es wird eine homogene Stromverteilung und eine homogene Druckverteilung über den gesamten metallisierten Oberflächenteil erreicht. Analoge Probleme werden im Falle anderer Elektrokeramiken durch die Laserbestrahlung vor der Metallisierung gelöst.

In einer besonders bevorzugten Variante des Herstellungsverfahrens wird als das Laserlicht ein fokussierter Laserstrahl eingesetzt. Insbesondere wird der Oberflächenteil vor dem Aufbringen der Metallisierung zur Verringerung der Welligkeit des Oberflächenteils mit einem fokussierten Laserstrahl bestrahlt, wodurch eine besonders gute und effiziente Einebnung des Oberflächenteils erreicht wird. Die Energiedichte des Laserstrahls kann auf diese Weise nahe der Oberfläche des Elektrokeramikkörpers maximiert werden, während weiter im Inneren des Keramikkörpers (unterhalb der Oberfläche) eine verringerte Energiedichte und somit eine geringere Beeinflussung des Keramikmaterials vorliegt. Insbesondere wird der Laserstrahl auf eine Fläche fokussiert wird, die parallel zu einer die Welligkeit des Oberflächenteils ausmittelnden Fläche angeordnet ist. Dadurch wird eine besonders gute Einebnung und somit eine besonders geringe Welligkeit des Oberflächenteils erzielt.

Eine weitere besonders bevorzugte Ausführungsform kennzeichnet sich dadurch, dass eine mittels des Laserstrahls pro Flächeneinheit in dem Oberflächenteil deponierte Energie zur Einebnung eines vor der Laserbestrahlung gekrümmten Oberflächenteils abhängig vom Ort auf dem Oberflächenteil gewählt wird.
Wenn die mittels des Laserstrahls pro Flächeneinheit in dem Oberflächenteil deponierte Energie abhängig vom Ort auf dem Oberflächenteil gewählt wird werden soll, kann dies vorteilhaft gemacht werden, indem eine Lichtleistung des Laserstrahls und/oder ein Strahldurchmesser des Laserstrahls und/oder die pro Zeiteinheit von dem Laserstrahl bestrahlte Fläche und/oder eine Anzahl von Bestrahlungen, denen eine Teilfläche des Oberflächenteils ausgesetzt wird, abhängig vom Ort auf dem Oberflächenteil gewählt wird.

Dadurch können unerwünschte Formabweichungen mit einer vertikalen Ausdehnung der Grössenordnung von typischerweise 0.1 mm bis 3 mm beseitigt oder zumindest deutlich verringert werden. Der Laserstrahl kann dann zum Beispiel mehrfach über einzuebnende Bereiche fahren und/oder in einzuebnenden Bereichen enger benachbarte Rasterlinien abfahren und/oder die Rasterlinien langsamer und/oder mit grösserer Lichtintensität abfahren. Vor der Laserbestrahlung oder während der Laserbestrahlung wird die Keramik vorteilhaft vermessen, um das Mass der Formabweichung und die entsprechend erforderliche Laserintensität zu bestimmen. Es wird ein ortsabhängiger Materialabtrag an dem Oberflächenteil erreicht. Insbesondere können auch grössere Welligkeiten oder Formabweichungen korrigiert werden als es der Einsatz eines fokussierten Laserstrahles ohne ortsabhängige Abtragungsrate erlaubte.

In einer weiteren vorteilhaften Ausführungsform der Erfindung weist der Elektrokeramikkörper eine Kornstruktur auf, und an dem Oberflächenteil werden lose Körner und/oder Kornverbünde des Elektrokeramikkörpers aufgewiesen, und/oder an Rissen in der Kornstruktur werden Körner und/oder Kornverbünde des Elektrokeramikkörpers aufgewiesen. Der Oberflächenteil wird vor dem Aufbringen der Metallisierung zur Abtragung solcher Körner und/oder Kornverbünde mit Laserlicht bestrahlt. Typische Lineardimension solcher Körner in Varistoren liegen zwischen 10 µm und mehreren 100 µm.

Durch eine mechanische Bearbeitung der Oberflächenteile (beispielsweise durch Schneiden, Schleifen oder Bürsten) können Defekte, wie Risse in dem Keramikkörper eingebracht werden, insbesondere in die obersten Kornschichten. Die oberste Schicht eines Oberflächenteils besteht dann oft aus einem losen Kornverbund, wodurch die Haftung der Metallisierung gesenkt wird. Solche losen oder an Rissen angeordnete Körner oder Kornverbünde können mittels der Laserstrahlung entfernt werden, so dass ein guter, homogener elektrischer und mechanischer Kontakt (hohe Zugfestigkeit) zwischen Keramik und Metallisierung erreicht wird.

Typischerweise wird ein Elektrokeramikkörper während des Sinterns mit mindestens einem Teil des Oberflächenteils auf einer Sinterunterlage gelagert. Dabei kann es vorkommen, dass Bestandteile der Sinterunterlage nach Abschluss des Sinterprozesses in dem Oberflächenteil verbleiben. Vorteilhaft können durch die Bestrahlung des Oberflächenteils mit Laserlicht vor dem Aufbringen der Metallisierung derartige Bestandteile der Sinterunterlage abgetragen werden. So wird eine homogene Beschaffenheit des Oberflächenteils erreicht, welche frei ist von durch derartige Bestandteile der Sinterunterlage hervorgerufenen lokalen Unterschieden in elektrischen Eigenschaften.

Vor oder nach dem Aufbringen der Metallisierung kann der Elektrokeramikkörper zumindest teilweise mit einer nichtleitenden Passivierungsschicht versehen werden. Wird eine solche Passivierungsschicht vor dem Aufbringen der Metallisierung aufgebracht, so kann es passieren, dass sich Teile der Passivierungsschicht auf dem Oberflächenteil befinden. In diesem Fall wird bevorzugt der Oberflächenteil vor dem Aufbringen der Metallisierung zur Abtragung von derartigen auf dem Oberflächenteil befindlichen Teilen der Passivierungsschicht mit Laserlicht bestrahlt. Grosse und inhomogene Übergangswiderstände zwischen Metallisierung und Elektrokeramikkörper, die aufgrund derartiger Teile der Passivierungsschicht entstünden, werden vermieden, so dass gleichmässige elektrische Eigenschaften und geringe Widerstände zwischen Metallisierung und Elektrokeramikkörper erzielt werden.

Das elektrokeramische Bauteil kann beispielsweise ein Varistor oder ein Hochtemperatursupraleiterbauteil oder ein piezokeramisches Bauteil oder ein Keramikkondensator oder ein Heiss- oder ein Kaltleiter oder ein keramischer Widerstand oder ein keramischer Gassensor sein.

Ist das elektrokeramische Bauteil ein Varistor und der Elektrokeramikkörper ein Varistorkörper, so ist bevorzugt der Varistorkörper eine dotierte gesinterte Metalloxid-Keramik, vorzugsweise auf Basis von ZnO, SnO₂ SrTiO₃ oder TiO₂, oder eine dotierte Karbidkeramik, beispielsweise SiC.

Wenn es sich bei dem Keramikkörper um einen Varistorkörper handelt, kann mit grossem Vorteil der Oberflächenteil eines Varistorkörpers zur Verringerung einer Spannungsabhängigkeit der Querleitfähigkeit des Oberflächenteils mit Laserlicht bestrahlt werden. Insbesondere kann eine vor der Laserbestrahlung vorliegende varistorartige Spannungsabhängigkeit der Querleitfähigkeit in eine (nahezu) ohmsche Kennlinie umgewandelt werden.

Die Oberfläche eines gesinterten Keramikkörpers hat im allgemeinen im wesentlichen dieselben elektrischen Eigenschaften wie das Volumen des gesinterten Keramikkörpers. Es wird also eine stark nichtlineare Strom-Spannungs-Kennlinie mit grossem elektrischen Widerstand bei Spannungen unterhalb der Schaltspannung (Durchbruchspannung) des Varistors aufgewiesen. Die starke Spannungsabhängigkeit der Querleitfähigkeit des Oberflächenteils kann so weit verringert werden, dass eine im wesentlichen lineare, also ohmsche Kennlinie aufgewiesen wird. Statt einer varistorartigen, stark nichtlinearen Abhängigkeit eines im Oberflächenteil fliessenden Stroms von einer anliegenden Spannung liegt nach der Laserbestrahlung eine im wesentlichen ohmsche Charakteristik der Querleitfähigkeit vor (in einem dünnen Oberflächenbereich). Der Varistor weist dadurch günstigere elektrische Eigenschaften und eine verbesserte Kontaktierbarkeit auf.

In einer weiteren bevorzugten Ausführungsform ist der Elektrokeramikkörper im wesentlichen zylindrisch, scheiben- oder plattenförmig geformt, wobei auf den zwei zueinander parallelen Begrenzungsflächen des Zylinders oder der Scheibe oder der Platte je ein Oberflächenteil angeordnet ist, auf welche zwei Oberflächenteile je eine Metallisierung aufgebracht wird. Das Aufbringen der Metallisierung erfolgt bevorzugt durch thermisches Spritzen.

In einer weiteren bevorzugten Ausführungsform ist der Elektrokeramikkörper im wesentlichen rohrförmig oder zylindrisch, wobei auf zwei voneinander axial beabstandeten, im wesentlichen ringförmigen, an der äusseren Mantelfläche des Rohres oder Zylinders angeordneten Oberflächenteilen je eine Metallisierung aufgebracht wird. Das Aufbringen der Metallisierung erfolgt bevorzugt durch thermisches Spritzen.

In der erfindungsgemässen Verwendung von Laserlicht wird dieses als Vorbehandlung für das Aufbringen einer Metallisierung auf eine Elektrokeramik, insbesondere auf eine Varistorkeramik, verwendet.

Weitere bevorzugte Ausführungsformen und Vorteile gehen aus den abhängigen Patentansprüchen und den Figuren hervor.

### Kurze Beschreibung der Zeichnungen

Im folgenden wird der Erfindungsgegenstand anhand von bevorzugten Ausführungsbeispielen, welche in den beiliegenden Zeichnungen veranschaulicht sind, näher erläutert. Es zeigen schematisch:
- Fig. 1: einen Schnitt durch einen erfindungsgemässen Varistor;
- Fig. 2: einen Oberflächenteil vor der Bestrahlung mit Laserlicht;
- Fig. 3: einen Oberflächenteil nach der Bestrahlung mit Laserlicht;
- Fig. 4: Strom-Spannungs-Kennlinien von laserbestrahlten und nichtlaserbestrahlten Oberflächenteilen eines Varistors;
- Fig. 5: einen Schnitt durch einen erfindungsgemässen scheibenförmigen Varistor mit teilweise metallisierten Oberflächen;
- Fig. 6: eine dreidimensionale Ansicht einer rohrförmigen Elektrokeramik mit zwei ringförmigen Elektroden.

Die in den Zeichnungen verwendeten Bezugszeichen und deren Bedeutung sind in der Bezugszeichenliste zusammengefasst aufgelistet. Grundsätzlich sind in den Figuren gleiche oder gleichwirkende Teile mit gleichen Bezugszeichen versehen. Die beschriebenen Ausführungsbeispiele stehen beispielhaft für den Erfindungsgegenstand und haben keine beschränkende Wirkung.

### Wege zur Ausführung der Erfindung

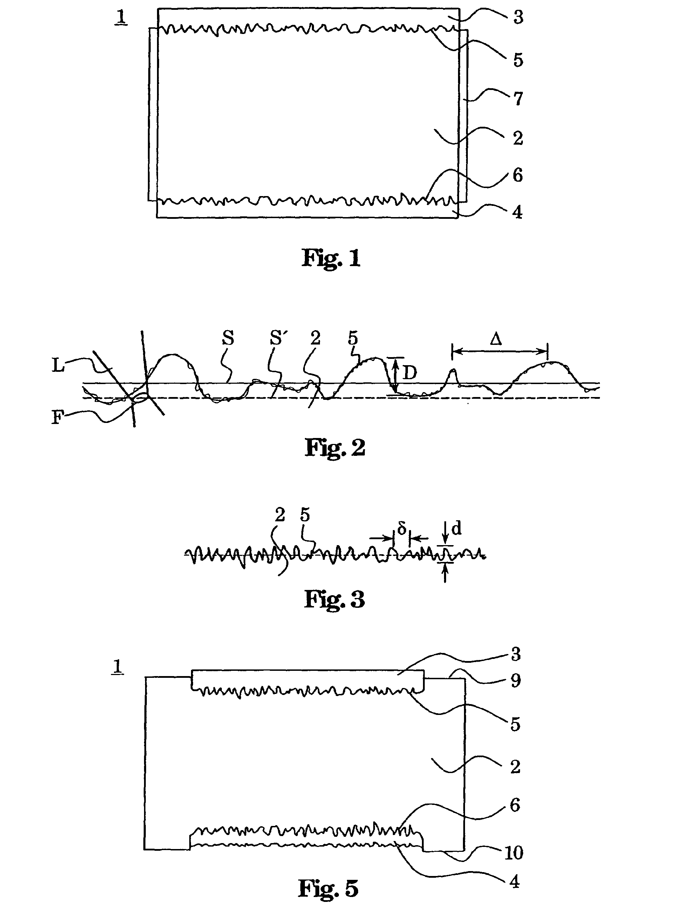

Fig. 1 zeigt schematisch einen Schnitt durch einen erfindungsgemässen hergestellten Varistor 1 als ein Beispiel eines elektrokeramischen Bauteils. Der Varistor ist im wesentlichen zylindrisch geformt und weist einen Varistorkörper 2 auf. Die Deckel- und Bodenfläche des Zylinders bilden Oberflächenteile 5 beziehungsweise 6, welche mit Metallisierungen 3 beziehungsweise 4 versehen sind. Die nicht-metallisierte zylindrische Umfangsfläche ist mit einer Passivierungsschicht 7 versehen.

Der Varistor 1 wird vorzugsweise zum Überspannungsschutz im Hochspannungs-, Mittelspannungs- oder auch Niederspannungsbereich verwendet. Allgemeiner Hintergrund zum Thema Varistoren und den vorzugsweise eingesetzten Materialien sind beispielsweise dem Buch "Ceramic Transaction", Vol. 3, Editor: L.M. Levinson, American Ceramic Society, 1988 oder der Publikation D.R. Clarke, Varistor Ceramics, J. Am. Ceram. Soc, 82 (1999), pp. 485-502 entnehmbar. Allgemeiner Hintergrund zum Thema Elektrokeramiken und den vorzugsweise eingesetzten Materialien sind beispielsweise dem Buch "Ceramic Materials for Electronics", Editor: Relva C. Buchanan, Electrical Engineering and Eletronics/31, 1986 entnehmbar.

Der Varistorkörper 2 ist eine gesinterte Keramik, vorzugsweise auf Basis eines Metalloxids, insbesondere ZnO. Neben dem Basis-Metalloxid beinhaltet der Varistorkörper 2 als Dotierung weitere Elemente, beispielsweise Bi, Sb, Co, Mn, Cr. Vorzugsweise ist der Varistorkörper 2 einstückig ausgebildet.

Die Metallisierungen 3,4 dienen der Kontaktierung des Varistorkörpers 2 und bilden insofern Elektroden 3,4. Die Metallisierungen 3,4 sollen eine grosse Stromtragfähigkeit und einen geringen Übergangswiderstand mit der Keramik 2 aufweisen. Ausserdem sollen sie eine gute Haftung zur Keramik (hohe Zugfestigkeit) aufweisen. Die Metallisierungen 3,4 sind vorzugsweise aus Al, Zn, Cu, Ag oder Legierungen wie beispielsweise Messing.

Die Metallisierungen 3,4 sind auf den Oberflächenteilen 5 beziehungsweise 6 aufgebracht. In Fig. 1 entsprechen die Oberflächenteile 5,6 der Bodenbeziehungsweise Deckelfläche des zylindrischen Varistorkörpers 2. Sie können aber auch grösser sein und die Boden- beziehungsweise Deckelfläche beinhalten oder auch kleiner sein und gegebenenfalls von der Boden- beziehungsweise Deckelfläche beinhaltet sein. In Fig. 1 sind die Metallisierungen 3,4 vollständig auf den Oberflächenteilen 5,6 angeordnet.

Die Passivierungsschicht 7 ist nichtleitend und vorzugsweise glasartig, keramisch oder ein Polymer.

Zur Herstellung des Varistors 1 werden die Bestandteile der Varistorkeramik 2 in Pulverform vermischt, gepresst und danach auf einer Sinterunterlage lagernd gesintert bei Temperaturen von typischerweise zwischen 900°C und 1 500°C. Danach kann eine mechanische Grobreinigung der Varistorkeramik 2 durchgeführt werden, beispielsweise durch Bürsten.

Die Oberfläche einer so erstellten Sinterkeramik 2 wird danach ganz oder vorzugsweise teilweise mit Laserstrahlung bestrahlt. Im Falle des in Fig. 1 dargestellten Varistors 1 werden die Boden- und Deckelflächen vollständig gelasert. Vorzugsweise wird der Laserstrahl in rasterartiger Weise über die zu bestrahlende Oberfläche geführt. Bevorzugte Parameter für die Laserbestrahlung sind:
- Lichtwellenlänge 600 nm bis 14000 nm, vorzugsweise 900 nm bis 1200 nm, insbesondere 1064 nm (Nd:YAG-Laser) oder 10600 nm (CO₂-Laser)
- gepulster Strahl, Pulsfrequenz zwischen 500 Hz und 80 kHz, vorzugsweise 5 kHz bis 20 kHz (cw-Betrieb ist auch möglich)
- mittlere Laserleistung zwischen 60 W und 200 W, vorzugsweise zwischen 80 W und 200 W
- Flächenrate der Bestrahlung: 0.1 cm²/s bis 20 cm²/s, vorzugsweise 0.5 cm²/s bis 4 cm²/s.

Vorzugsweise wird jedes Flächensegment nur einmal bestrahlt; es ist aber auch möglich und kann vorteilhaft sein, zwei- oder mehrmals dasselbe Flächensegment zu bestrahlen.

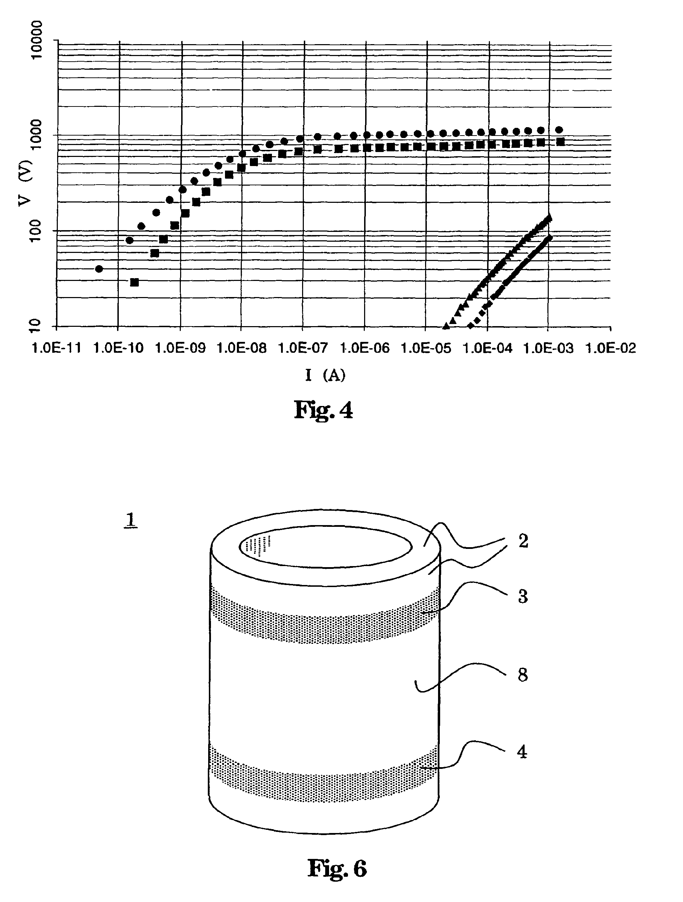

Da der mit dem Laser bestrahlte Bereich (Scanbereich) elektronisch oder rechnergestützt steuerbar ist, können auch komplexe Geometrien erzeugt und komplex geformte Varistorkörper bearbeitet werden. Beispielsweise sind rechteckig geformte Elektroden und Elektroden auf einer Mantelfläche eines rohrförmigen oder zylindrischen Varistorkörpers, die sich beispielsweise entlang eines Umfangs des Varistorkörpers erstrecken, realisierbar (siehe zum Beispiel Fig. 6).

Vorzugsweise wird ein fokussierter Laserstrahl verwendet. Typische Brennweiten liegen zwischen 10 mm und 800 mm, vorzugsweise zwischen 50 mm und 250 mm.

Fig. 2 zeigt schematisch einen Schnitt durch einen gesinterten Varistorkörper 2 vor der Laserbestrahlung. Der Laserstrahl L ist angedeutet mit seinem Brennpunkt F. Der dargestellte Oberflächenteil 5 weist eine Welligkeit auf, welche vorwiegend auf Eindrücke der Sinterunterlage zurückzuführen sind. Diese Welligkeit hat typischerweise eine Lateraldimension Δ der Grössenordnung 10 µm bis mehrere Millimeter und eine typische Vertikaldimension D der Grössenordnung 10 µm bis 0.5 mm. In Fig. 2 ist mittels der dünn gezeichneten Linie, welche den Oberflächenteil 5 (mittels dicker Linie dargestellt) umschwingt, veranschaulicht, dass eine gesinterte Varistorkörperoberfläche im allgemeinen auch noch eine gewisse (mikroskopische) Rauhigkeit aufweist.

Eine die Welligkeit des Oberflächenteils 5 ausmittelnde Fläche ist in Fig. 2 als S bezeichnet. Im Falle einer Deckelfläche eines zylindrischen Varistorkörpers 2 (vergleiche Fig. 1) ist die Fläche S eine ebene Fläche. Aufgrund einer erstrebten Homogenität des elektrischen Feldes in dem Varistorkörper 2 wird im allgemeinen eine ebene Form der Elektroden 3,4 bevorzugt, so dass die Fläche S bevorzugt eben ist. Besonders geeignet zur Verringerung der Vertikaldimension der Welligkeit ist es, wenn der Fokus F des Laserstrahles L derart geführt wird, dass er stets in einer zu der Fläche S parallelen Fläche S' liegt. Die Fläche S' ist vorteilhaft auf der dem Volumen des Varistorkörpers 2 zugewandten Seite der Fläche S angeordnet, vorzugsweise mit einem Abstand von 0.1 mm bis 2 mm. Durch die Verwendung eines fokussierten Laserstrahles ergibt sich eine tiefenabhängige Energiedichte und Abtragungsleistung des Laserstrahles.

Es kann passieren, dass nach dem Sintern Teile der Sinterunterlage in der Oberfläche des Varistorkörpers 2 verbleiben. Derartige Sinterunterlagenbestandteile können durch die Laserbestrahlung abgetragen werden. Ebenso ist es möglich, andere Verschmutzungen mittels der Laserbestrahlung von der Oberfläche des Varistorkörpers 2 abzutragen. Vorteilhaft kann vor der Laserbestrahlung noch eine mechanische Grobreinigung, beispielsweise Bürsten, stattfinden.

Fig. 3 zeigt schematisch im Schnitt einen vergrösserten Ausschnitt aus einem Oberflächenteil 5 gemäss Fig. 2, nach der Laserbestrahlung. Die Welligkeit ist praktisch eliminiert. Dadurch ergeben sich sehr homogene Feldverteilungen und eine gleichmässige Stromverteilung. Zudem weist der Oberflächenteil 5 eine Rauhigkeit auf. Diese Mikrorauhigkeit hat typischerweise eine Lateraldimension der Grössenordnung 1 µm bis 10 µm und eine Vertikaldimension der Grössenordnung 1 um. Die Mikrorauhigkeit bewirkt eine gute Haftung der Metallisierung auf dem gelaserten Oberflächenteil 5. Vorzugsweise erzeugte Mikrorauhigkeiten Rₐ betragen 1 µm bis 4 µm und sind somit den gewöhnlichen, mittels Ätzens erzeugten Mikrorauhigkeiten von typischerweise 1 µm bis 1.5 µm Tiefe gleichwertig oder sogar deutlich überlegen.

Die Laserbestrahlung dient vor allem der Vorbehandlung der Varistorkeramik 2 für die nachfolgende Metallisierung. Die Metallisierungen 3,4 werden vorzugsweise mittels thermischen Spritzens, beispielsweise Lichtbogenspritzen, auf die Oberflächenteile 5,6 aufgebracht. Für durch thermisches Spritzen aufgebrachte Metallschichten ist eine ausreichende Rauhigkeit der zu metallisierenden Oberfläche besonders wichtig, da die Haftung im wesentlichen mechanisch und nicht oder kaum chemisch bedingt ist. Weitere Metallisierungsverfahren (Beschichtungsverfahren), wie beispielsweise PVD, Sputtern, elektrochemische Abscheidung oder Siebdruck, sind ebenfalls möglich.

Selbstverständlich kann eine Fläche laserbestrahlt werden, von welcher dann nur ein Teil (nämlich der Oberflächenteil 5 beziehungsweise 6) metallisiert wird. Beispielsweise kann die ganze Boden- beziehungsweise Deckelfläche gelasert werden, welche dann nur teilweise mit den Metallisierungen 3,4 versehen werden.

Durch die Laserbestrahlung kann aber auch die chemische Zusammensetzung des Oberflächenteils modifiziert werden. Auf diese Weise kann eine verbesserte Haftung zwischen Metallisierung und aufgebrachtem Metall erreicht werden.

Vor oder nach dem Aufbringen der Metallisierungen 3,4 wird vorteilhaft die Passivierungsschicht 7 aufgebracht. Sie stellt eine Isolationsschicht dar. Wird die Passivierungsschicht 7 vor dem Aufbringen der Metallisierungen 3,4 aufgebracht, so können dadurch nichtleitende, glasartige oder polymere Rückstände auf die Oberflächenteile 5,6 gelangen. Solche Rückstände , die zu Inhomogenitäten des elektrischen Feldes und elektrischen Durchschlägen führen könnten, können durch die Laserbestrahlung abgetragen werden.

In Fig. 4 sind Strom-Spannungs-Kennlinien doppelt-logarithmisch dargestellt, welche mittels zweier auf einem nicht-laserbestrahlten Oberflächenteil (Kreise und Quadrate) und auf einem laserbestrahlten Oberflächenteil (Dreiecke und Rauten) eines Varistorkörpers aufgebrachten Elektroden gemessen wurden. Die zwischen den Elektroden angelegte Spannung V ist gegen den zwischen den Elektroden fliessenden Strom I aufgetragen. Der Abstand zwischen den Elektroden betrug 3 mm für die durch Quadrate und die durch Rauten dargestellten Daten. Für die durch Kreise und die durch Dreiecke dargestellen Messpunkte betrug der Elektrodenabstand 4 mm. Deutlich ist bei den auf nicht-laserbestrahlten Oberflächenteilen gemessenen Daten (Kreise und Quadrate) ein varistorartiges Verhalten erkennbar mit einer Durchbruchspannung zwischen 800 V und 1000 V. Bei dem auf dem laserbestrahlten Oberflächenteil gemessenen Daten (Dreiecke und Rauten) ist ein ohmsches Verhalten deutlich sichtbar. Ausserdem ist der Kontaktwiderstand deutlich geringer als ohne Laserbestrahlung. Die Querleitfähigkeit wird durch die Laserbestrahlung drastisch erhöht. In dem gemessenen Spannungsbereich ist der Widerstand um vier bis neun Grössenordnungen verringert.

Fig. 5 dient der weiteren Illustration der Erfindung und zeigt einen ähnlichen Varistor 1 wie Fig. 1. Darum wird Fig. 5 ausgehend von Fig. 1 beschrieben. Im Gegensatz zu dem Varistor 1 in Fig. 1 nehmen die Elektroden 3,4 in Fig. 5 nicht die gesamte Deckel- beziehungsweise Bodenfläche des Zylinders ein, sondern nur einen Teil, so dass sich jeweils ein an den Oberflächenteilen 5 und 6 angrenzender Rand 9 beziehungsweise 10 ergibt. Die Ränder 9 beziehungsweise 10 verringern die Wahrscheinlichkeit eines elektrischen Überschlags. Wenn sich die Metallisierungen 3,4, wie in den Beispiel aus Fig. 1, bis an die die Zylindermantelfläche von der Deckel- beziehungsweise Bodenfläche des Zylinders trennende Kante erstreckten, dann wäre ein elektrischer Überschlag zwischen den beiden Metallisierungen bei einer anliegenden Spannung viel wahrscheinlicher als mit den Rändern 9,10 aus Fig. 5.

Es ist deutlich dargestellt, dass durch die Laserbestrahlung der Oberflächenteile 5,6 ein Materialabtrag stattgefunden hat. Die Ränder 9,10 überragen die Oberflächenteile 5,6. Die Metallisierungen 3 und 4 sind in Fig. 6 verschiedenartig ausgebildet. Normalerweise werden aber eher zwei gleichartige Metallisierungen 3,4 bevorzugt.

Die Metallisierung 3 des Oberflächenteils 5 ist so dick, dass sie den Rand 9 überragt. Dadurch ergibt sich eine leichtere Kontaktierbarkeit mittels eines Kontaktstücks (nicht dargestellt), das mindestens in etwa so gross ist wie der Oberflächenteil 5.

Die Haftung der Metallisierung 3 ist durch die Laserbestrahlung auf dem Oberflächenteil 5 erhöht. Falls während des Metallisierens überhaupt Metall auf dem Rand 9 zu haften vermag, so haftet es dort deutlich geringer als das Metall auf dem Oberflächenteil 5. Dadurch kann eventuell auf dem Rand 9 deponiertes Metall einfach entfernt werden, so dass eine durch die Laserbestrahlung definierte Elektrodengeometrie entsteht.

Der Oberflächenteil 6 ist, anders als der Oberflächenteil 5, mit einer so dünnen Metallisierung 4 versehen, dass diese von dem Rand 10 überragt wird. Dadurch bildet der Rand 10 eine (zusätzliche) Barriere gegen elektrische Durchschläge.

Ätzverfahren haben den Nachteil, dass die Keramikkörper in ein Ätzbad gelegt werden und deshalb die ganze Keramik geätzt wird, also sowohl zu metallisierende Oberflächenteile als auch Oberflächenteile, die nicht zu metallisieren sind. Dies kann die elektrischen Eigenschaften der Keramik negativ beeinflussen. Ein Abdecken nicht zu metallisierende Oberflächenteile während des Ätzens ist schwierig und aufwendig. Die Laserbestrahlung bedarf solcher Masken nicht.

Fig. 6 zeigt ein Beispiel für nicht-planare Elektroden 3,4. Das dargestellte elektrokeramische Bauteil 1 (beispielsweise Varistor 1 oder Piezokeramik 1) weist einen rohrförmigen Keramikkörper 2 auf. Die Elektroden 3,4 sind auf der äusseren Mantelfläche 8 des Röhrchens angeordnet und ringförmig, die Mantelfläche 8 umschliessend ausgebildet. Mittels der Laserbestrahlung sind solche und auch komplexer geformte Oberflächenteile behandelbar.

Grundsätzlich kann die Laserbehandlung in Luft oder auch in einer anderen Gasatmosphäre (beispielsweise N₂, H₂, O₂) stattfinden. Dadurch kann die Leitfähigkeit und chemische Zusammensetzung des bestrahlten Oberflächenteils beeinflusst werden.

Mittels der erfindungsgemässen Laserbestrahlung eines Varistorkörpers können also Unebenheiten oder Welligkeiten eines zu metallisierenden Oberflächenteiles des Elektrokeramikkörpers verringert oder beseitigt werden und eine Mikrorauhigkeit sowie eine Modifikation der chemischen Oberflächenzusammensetzung des Oberflächenteils erzeugt werden, welche eine gute Haftung der Metallisierung ermöglichen. Zudem kann bei Varistorkeramiken eine zumindest nahezu ohmsch leitende Oberfläche mit grosser Querleitfähigkeit erzeugt werden, aufgrund welcher eine sehr homogene Stromverteilung insbesondere nahe der Metallisierung erreicht wird. Weiter ist es möglich, Rückstände abzutragen, welche insbesondere von der Sinterunterlage oder von dem Aufbringen einer Passivierungsschicht stammen. Weitere vorteilhafte Wirkungen und Ausführungsformen sind weiter oben genannt.

### Bezugszeichenliste

- 1: Elektrokeramisches Bauteil, Varistor
- 2: Elektrokeramik, Elektrokeramikkörper, Varistorkeramik, Varistorkeramikkörper
- 3,4: Metallisierung, Elektrode
- 5,6: Oberflächenteil
- 7: Passivierungsschicht
- 8: äussere Mantelfläche
- 9,10: Rand

- d: typische Vertikaldimension der Rauhigkeit
- D: typische Vertikaldimension der Welligkeit
- δ: typische Lateraldimension der Rauhigkeit
- Δ: typische Lateraldimension der Welligkeit
- F: Fokus des Laserstrahls
- L: Laserlicht, Laserstrahl
- S,S': Fläche

## Patentansprüche

1. Verfahren zur Herstellung eines elektrokeramischen Bauteils (1), wobei auf mindestens einen Oberflächenteil (5;6) eines gesinterten Elektrokeramikkörpers (2) eine Metallisierung (3;4) aufgebracht wird und vor dem Aufbringen der Metallisierung (3;4) der Oberflächenteil (5;6) mit Laserlicht (L) bestrahlt wird, **dadurch gekennzeichnet, dass** durch die Laserlichtbestrahlung in dem Oberflächenteil (5;6) Material der Elektrokeramik (2) abgetragen wird.

2. Herstellungsverfahren gemäss Anspruch 1, **dadurch gekennzeichnet, dass** der Elektrokeramikkörper (2) nach der Laserbestrahlung einen an den Oberflächenteil (5;6) angrenzenden Rand (9) aufweist, welcher Rand (9) nicht oder weniger als der Oberflächenteil (5;6) mit dem Laserlicht (L) bestrahlt wird.

3. Herstellungsverfahren gemäss Anspruch 1 oder 2, **dadurch gekennzeichnet, dass** zur Aufrauhung des oberflächenteils (5;6) der Oberflächenteil (5;6) vor dem Aufbringen der Metallisierung (3;4) mit dem Laserlicht (L) bestrahlt wird.

4. Herstellungsverfahren gemäss einem der vorangegangenen Ansprüche, **dadurch gekennzeichnet, dass** zur Verbesserung der Haftung der Metallisierung (3;4) durch Modifikation der chemischen Beschaffenheit des Oberflächenteils (5;6) der Oberflächenteil (5;6) vor dem Aufbringen der Metallisierung (3;4) mit dem Laserlicht (L) bestrahlt wird.

5. Herstellungsverfahren gemäss einem der vorangegangenen Ansprüche, **dadurch gekennzeichnet, dass** zur Vergrösserung der elektrischen Querleitfähigkeit des Oberflächenteils (5;6) der Oberflächenteil (5;6) vor dem Aufbringen der Metallisierung (3;4) mit dem Laserlicht (L) bestrahlt wird.

6. Herstellungsverfahren gemäss einem der vorangegangenen Ansprüche, **dadurch gekennzeichnet, dass** der Oberflächenteil (5;6) nach dem Sintern des Elektrokeramikkörpers (2) eine Welligkeit aufweist, und dass der Oberflächenteil (5;6) vor dem Aufbringen der Metallisierung (3;4) zur Verringerung der Welligkeit des Oberflächenteils (5;6) mit dem Laserlicht (L) bestrahlt wird.

7. Herstellungsverfahren gemäss einem der vorangegangenen Ansprüche, **dadurch gekennzeichnet, dass** als das Laserlicht (L) ein fokussierter Laserstrahl (L) eingesetzt wird, insbesondere wobei der Oberflächenteil (5;6) vor dem Aufbringen der Metallisierung (3;4) zur Verringerung einer Welligkeit des Oberflächenteils (5;6) mit dem Laserlicht (L) bestrahlt wird und der Laserstrahl (L) auf eine Fläche (S') fokussiert wird, die parallel zu einer die Welligkeit des Oberflächenteils (5;6) ausmittelnden Fläche (S) angeordnet ist.

8. Herstellungsverfahren gemäss einem der vorangegangenen Ansprüche, **dadurch gekennzeichnet, dass** eine mittels des Laserstrahls (L) pro Flächeneinheit in dem Oberflächenteil (5;6) deponierte Energie zur Einebnung eines vor der Laserbestrahlung gekrümmten Oberflächenteils (5;6) abhängig vom Ort auf dem Oberflächenteil (5;6) gewählt wird.

9. Herstellungsverfahren gemäss einem der vorangegangenen Ansprüche, **dadurch gekennzeichnet, dass** eine mittels des Laserstrahls (L) pro Flächeneinheit in dem Oberflächenteil (5;6) deponierte Energie abhängig vom Ort auf dem Oberflächenteil (5;6) gewählt wird, indem eine Lichtleistung des Laserstrahls (L) und/oder ein Strahldurchmesser des Laserstrahls (L) und/oder die pro Zeiteinheit von dem Laserstrahl (L) bestrahlte Fläche und/oder eine Anzahl von Bestrahlungen, denen eine Teilfläche des Oberflächenteils (5;6) ausgesetzt wird, abhängig vom Ort auf dem Oberflächenteil (5;6) gewählt wird.

10. Herstellungsverfahren gemäss einem der vorangegangenen Ansprüche, **dadurch gekennzeichnet, dass** der Elektrokeramikkörper (2) eine Kornstruktur aufweist, und dass an dem Oberflächenteil (5;6) lose Körner und/oder Kornverbünde des Elektrokeramikkörpers (2) und/oder an Rissen in der Kornstruktur angeordnete Körner und/oder Kornverbünde des Elektrokeramikkörpers (2) aufgewiesen werden, wobei der Oberflächenteil (5;6) vor dem Aufbringen der Metallisierung (3;4) zur Abtragung von solchen Körnern und/oder Kornverbünden mit Laserlicht (L) bestrahlt wird.

11. Herstellungsverfahren gemäss einem der vorangegangenen Ansprüche, wobei der Elektrokeramikkörper (2) während des Sinterns mit mindestens einem Teil des Oberflächenteils (5;6) auf einer Sinterunterlage gelagert wird, **dadurch gekennzeichnet, dass** der Oberflächenteil (5;6) vor dem Aufbringen der Metallisierung (3;4) zur Abtragung von nach dem Sintern in dem Oberflächenteil (5;6) verbliebenen Bestandteilen der Sinterunterlage mit Laserlicht (L) bestrahlt wird.

12. Herstellungsverfahren gemäss einem der vorangegangenen Ansprüche, wobei der Elektrokeramikkörper (2) vor dem Aufbringen der Metallisierung (3;4) zumindest teilweise mit einer nichtleitenden Passivierungsschicht (7) versehen wird, **dadurch gekennzeichnet, dass** der Oberflächenteil (5;6) vor dem Aufbringen der Metallisierung (3;4) zur Abtragung von auf dem Oberflächenteil (5;6) befindlichen Teilen der Passivierungsschicht (7) mit Laserlicht (L) bestrahlt wird.

13. Herstellungsverfahren gemäss einem der vorangegangenen Ansprüche, **dadurch gekennzeichnet, dass** das elektrokeramische Bauteil (1) ein Varistor (1) oder ein Hochtemperatursupraleiterbauteil oder ein piezokeramisches Bauteil oder ein Keramikkondensator oder ein Heiss- oder ein Kaltleiter oder ein keramischer Widerstand oder ein keramischer Gassensor ist.

14. Herstellungsverfahren gemäss einem der vorangegangenen Ansprüche, **dadurch gekennzeichnet, dass** das elektrokeramische Bauteil (1) ein Varistor (1) und der Elektrokeramikkörper (2) ein Varistorkörper (2) ist, und dass der Varistorkörper (2) eine dotierte gesinterte Metalloxid-Keramik (2), vorzugsweise auf Basis von ZnO, SnO₂, SrTiO₃ oder TiOz, oder eine dotierte Karbidkeramik ist.

15. Herstellungsverfahren gemäss einem der vorangegangenen Ansprüche, **dadurch gekennzeichnet, dass** das elektrokeramische Bauteil (1) ein Varistor (1) und der Elektrokeramikkörper (2) ein Varistorkörper (2) ist, und dass der Oberflächenteil (5;6) vor dem Aufbringen der Metallisierung (3;4) zur Verringerung einer Spannungsabhängigkeit der Querleitfähigkeit des Oberflächenteils (5;6) mit Laserlicht (L) bestrahlt wird, insbesondere dass der Oberflächenteil (5;6) vor dem Aufbringen der Metallisierung (3;4) zur Erzeugung einer ohmschen Spannungsabhängigkeit der Querleitfähigkeit des Oberflächenteils (5;6) mit Laserlicht (L) bestrahlt wird.

16. Herstellungsverfahren gemäss einem der vorangegangenen Ansprüche, **dadurch gekennzeichnet, dass** entweder der Elektrokeramikkörper (2) im wesentlichen zylindrisch, scheiben- oder plattenförmig geformt ist, wobei auf den zwei zueinander parallelen Begrenzungsflächen des Zylinders oder der Scheibe oder der Platte je ein Oberflächenteil (5;6) angeordnet ist, auf welche zwei Oberflächenteile (5,6) je eine Metallisierung (3,4) durch thermisches Spritzen aufgebracht wird, oder der Elektrokeramikkörper (2) im wesentlichen rohrförmig oder zylindrisch geformt ist, wobei auf zwei voneinander axial beabstandeten, im wesentlichen ringförmigen, an der äusseren Mantelfläche (8) des Rohres oder Zylinders angeordneten Oberflächenteilen (5,6) eine Metallisierung (3,4) durch thermisches Spritzen aufgebracht wird.

17. Verwendung von Laserstrahlung (L) zur Materialabtragung als Vorbehandlung für das Aufbringen einer Metallisierung (3;4) auf eine Elektrokeramik (2), insbesondere auf eine Varistorkeramik (2).

18. Elektrokeramisches Bauteil (1) **dadurch gekennzeichnet, dass** das elektrokeramische Bauteil (1) durch das Herstellungsverfahren nach einem der Ansprüche 1 bis 16 hergestellt ist.

19. Elektrokeramisches Bauteil (1) gemäss Anspruch 1 8, **dadurch gekennzeichnet, dass** das elektrokeramische Bauteil (1) ein Varistor (1) ist.

20. Elektrokeramisches Bauteil (1) gemäss Anspruch 18 oder 19, **dadurch gekennzeichnet, dass** das elektrokeramische Bauteil (1) einen Oberflächenteil (5, 6) aufweist, der durch Bestrahlung mit einem fokussierten Laser eine Verringerung der Welligkeit des Oberflächenteils (5, 6) aufweist.

21. Elektrokeramisches Bauteil (1) gemäss Anspruch 19, **dadurch gekennzeichnet, dass** nach Laserbestrahlung die Querleitfähigkeit des elektrokeramischen Bauteils (1) eine im Wesentlichen ohmsche Charakteristik aufweist.

## Claims

1. Method for manufacturing an electroceramic component (1), a metallization (3; 4) being applied to at least one part (5; 6) of the surface of a sintered electroceramic body (2), and the part (5; 6) of the surface being irradiated with laser light (L) before the metallization (3; 4) is applied, **characterized in that** material of the electroceramic (2) is removed by the laser light irradiation in the part (5; 6) of the surface.

2. Manufacturing method according to Claim 1, **characterized in that**, after the laser irradiation, the electroceramic body (2) has a border (9) which adjoins the part (5; 6) of the surface, which border (9) is not irradiated, or is irradiated less, with the laser light (L) than the part (5; 6) of the surface.

3. Manufacturing method according to Claim 1 or 2, **characterized in that**, in order to roughen the part (5; 6) of the surface, the part (5; 6) of the surface is irradiated with the laser light (L) before the metallization (3; 4) is applied.

4. Manufacturing method according to one of the preceding claims, **characterized in that**, in order to improve the adhesion of the metallization (3; 4) by modifying the chemical quality of the part (5; 6) of the surface, the part (5; 6) of the surface is irradiated with the laser light (L) before the metallization (3; 4) is applied.

5. Manufacturing method according to one of the preceding claims, **characterized in that**, in order to increase the electrical transverse conductivity of the part (5; 6) of the surface, the part (5; 6) of the surface is irradiated with the laser light (L) before the metallization (3; 4) is applied.

6. Manufacturing method according to one of the preceding claims, **characterized in that**, after the sintering of the electroceramic body (2), the part (5; 6) of the surface has a waviness, and **in that**, before the metallization (3; 4) is applied, the part (5; 6) of the surface is irradiated with the laser light (L) in order to reduce the waviness of the part (5; 6) of the surface.

7. Manufacturing method according to one of the preceding claims, **characterized in that** a focused laser beam (L) is used as the laser light (L), in which case, in particular, before the metallization (3; 4) is applied, the part (5; 6) of the surface is irradiated with the laser light (L) in order to reduce a waviness of the part (5; 6) of the surface, and the laser beam (L) is focused on an area (S') which is arranged in parallel with an area (S) which averages the waviness of the part (5; 6) of the surface.

8. Manufacturing method according to one of the preceding claims, **characterized in that** an amount of energy which is deposited per unit area in the part (5; 6) of the surface by means of the laser beam (L) in order to level out a part (5; 6) of the surface which is curved before the irradiation by laser is selected as a function of the location on the part (5; 6) of the surface.

9. Manufacturing method according to one of the preceding claims, **characterized in that** an amount of energy which is deposited per unit area in the part (5; 6) of the surface by means of the laser beam (L) is selected as a function of the location on the part (5; 6) of the surface by selecting a light output of the laser beam (L) and/or a beam diameter of the laser beam (L) and/or the area which is irradiated per time unit by the laser beam (L) and/or a number of irradiations to which an area of the part (5; 6) of the surface is subjected as a function of the location on the part (5; 6) of the surface.

10. Manufacturing method according to one of the preceding claims, **characterized in that** the electroceramic body (2) has a particle structure, and **in that** loose particles and/or particle composites of the electroceramic body (2) are found to be present on the part (5; 6) of the surface and/or particles and/or particle composites of the electroceramic body (2) which are arranged in fissures in the particle structure are found to be present, the part (5; 6) of the surface being irradiated with laser light (L), before the application of the metallization (3; 4), in order to remove such particles and/or particle composites.

11. Manufacturing method according to one of the preceding claims, the electroceramic body (2) being supported during the sintering by at least part of the part (5; 6) of the surface on a sinter support, **characterized in that**, before the application of the metallization (3; 4), the part (5; 6) of the surface is irradiated with laser light (L) in order to remove parts of the sinter support which have remained in the part (5; 6) of the surface after the sintering.

12. Manufacturing method according to one of the preceding claims, the electroceramic body (2) being provided, before the application of the metallization (3; 4), at least partially with a nonconductive passivation layer (7), **characterized in that**, before the application of the metallization (3; 4), the part (5; 6) of the surface is irradiated with laser light (L) in order to remove parts of the passivation layer (7) which are located on the part (5; 6) of the surface.

13. Manufacturing method according to one of the preceding claims, **characterized in that** the electroceramic component (1) is a varistor (1) or a high-temperature superconductor component or a piezo ceramic component or a ceramic capacitor or an NTC thermistor or a PTC thermistor or a ceramic resistor or a ceramic gas sensor.

14. Manufacturing method according to one of the preceding claims, **characterized in that** the electroceramic component (1) is a varistor (1) and the electroceramic body (2) is a varistor body (2), and **in that** the varistor body (2) is a doped sintered metal oxide ceramic (2), preferably based on ZnO, SnO₂, SrTiO₃ or TiO₂, or a doped carbide ceramic.

15. Manufacturing method according to one of the preceding claims, **characterized in that** the electroceramic component (1) is a varistor (1) and the electroceramic body (2) is a varistor body (2), and **in that**, before the application of the metallization (3; 4), the part (5; 6) of the surface is irradiated with laser light (L) in order to reduce a voltage dependence of the transverse conductivity of the part (5; 6) of the surface, in particular **in that**, before the application of the metallization (3; 4), the part (5; 6) of the surface is irradiated with laser light (L) in order to produce an ohmic voltage dependence of the transverse conductivity of the part (5; 6) of the surface.

16. Manufacturing method according to one of the preceding claims, **characterized in that** either the electroceramic body (2) is fashioned in an essentially cylindrical shape, disk shape or plate shape, in each case a part (5; 6) of the surface being arranged on the two boundary faces of the cylinder or of the disk or of the plate which are parallel with one another, on which two parts (5, 6) of the surface in each case one metallization (3, 4) is applied by thermal spraying, or the electroceramic body (2) is fashioned in an essentially tubular shape or cylindrical shape, a metallization (3, 4) being applied by thermal spraying to two essentially annular parts (5, 6) of the surface which are spaced apart from one another axially and are arranged on the outer surface (8) of the tube or cylinder.

17. Use of laser irradiation (L) for the removal of material as a pretreatment for the application of a metallization (3; 4) to an electroceramic (2), in particular to a varistor ceramic (2).

18. Electroceramic component (1), **characterized in that** the electroceramic component (1) is manufactured by means of the manufacturing method according to one of Claims 1 to 16.

19. Electroceramic component (1) according to Claim 18, **characterized in that** the electroceramic component (1) is a varistor (1).

20. Electroceramic component (1) according to Claim 18 or 19, **characterized in that** the electroceramic component (1) has a part (5, 6) of the surface which has a reduction in the waviness in the part (5, 6) of the surface through irradiation with a focused laser.

21. Electroceramic component (1) according to Claim 19, **characterized in that**, after laser irradiation, the transverse conductivity of the electroceramic component (1) has an essentially ohmic characteristic.

## Revendications

1. Procédé de fabrication d'un composant électrocéramique (1), dans lequel une métallisation (3; 4) est appliquée sur au moins une partie de surface (5; 6) d'un corps fritté (2) en électrocéramique, la partie de surface (5; 6) étant irradiée par de la lumière laser (L) avant l'application de la métallisation (3; 4), **caractérisé en ce que** l'irradiation par la lumière laser enlève du matériau de l'électrocéramique (2) dans la partie de surface (5; 6).

2. Procédé de fabrication selon la revendication 1, **caractérisé en ce que** le corps (2) en électrocéramique présente après l'irradiation par laser un bord (9) qui délimite la partie de surface (5; 6), lequel bord (9) n'est pas irradié ou est moins irradié par la lumière laser (L) que la partie de surface (5; 6).

3. Procédé de fabrication selon les revendications 1 ou 2, **caractérisé en ce que** pour rendre rugueuse la partie de surface (5; 6), la partie de surface (5; 6) est irradiée par la lumière laser (L) avant l'application de la métallisation (3; 4).

4. Procédé de fabrication selon l'une des revendications précédentes, **caractérisé en ce que** pour améliorer l'adhérence de la métallisation (3; 4) par modification de la nature chimique de la partie de surface (5; 6), la partie de surface (5; 6) est irradiée par la lumière laser (L) avant l'application de la métallisation (3; 4).

5. Procédé de fabrication selon l'une des revendications précédentes, **caractérisé en ce que** pour augmenter la conductivité électrique transversale de la partie de surface (5; 6), la partie de surface (5; 6) est irradiée par la lumière laser (L) avant l'application de la métallisation (3; 4).

6. Procédé de fabrication selon l'une des revendications précédentes, **caractérisé en ce que** la partie de surface (5; 6) présente après le frittage du corps (2) en électrocéramique une ondulation et **en ce que** la partie de surface (5; 6) est irradiée par la lumière laser (L) avant l'application de la métallisation (3; 4) en vue de diminuer les ondulations de la partie de surface (5; 6).

7. Procédé de fabrication selon l'une des revendications précédentes, **caractérisé en ce que** comme lumière laser (L), on utilise un faisceau laser (L) focalisé, en particulier la partie de surface (5; 6) étant irradiée par la lumière laser (L) avant l'application de la métallisation (3; 4) pour diminuer les ondulations de la partie de surface (5; 6), et le faisceau laser (L) est focalisé sur une surface (S') disposée parallèlement à une surface moyenne (S) des ondulations de la partie de surface (5; 6).

8. Procédé de fabrication selon l'une des revendications précédentes, **caractérisé en ce qu'**au moyen du faisceau laser (L), on sélectionne l'énergie déposée par unité de surface dans la partie de surface (5; 6) pour lisser une partie de surface (5; 6) courbe avant l'irradiation par laser en fonction de l'emplacement traité de la partie de surface (5; 6).

9. Procédé de fabrication selon l'une des revendications précédentes, **caractérisé en ce qu'**au moyen du faisceau laser (L), on sélectionne l'énergie déposée par unité de surface dans la partie de surface (5; 6) en fonction de l'emplacement traité de la partie de surface (5; 6) en sélectionnant en fonction de l'emplacement traité de la partie de surface (5; 6) la puissance lumineuse du faisceau laser (L) et/ou le diamètre du faisceau laser (L) et/ou la surface irradiée par unité de temps par le faisceau laser (L) et/ou le nombre d'irradiations auxquelles une partie de la partie de surface (5; 6) est exposée.

10. Procédé de fabrication selon l'une des revendications précédentes, **caractérisé en ce que** le corps (2) en électrocéramique présente une structure granulaire et **en ce que** des grains lâches et/ou des agrégats lâches de grains du corps (2) en électrocéramique et disposés dans la partie de surface (5; 6) et/ou des grains et/ou agrégats de grains situés dans des fissures de la structure granulaire du corps (2) en électrocéramique sont présents, la partie de surface (5; 6) étant irradiée par la lumière laser (L) avant l'application de la métallisation (3; 4) pour arracher ces grains et/ou agrégats de grains.

11. Procédé de fabrication selon l'une des revendications précédentes, dans lequel le corps en céramique (2) est placé par au moins une partie de la partie de surface (5; 6) sur un soubassement de frittage pendant le frittage, **caractérisé en ce que** la partie de surface (5; 6) est irradiée par la lumière laser (L) avant l'application de la métallisation (3; 4) pour arracher les composants restants du soubassement de frittage encore présents dans la partie de surface (5; 6) après le frittage.

12. Procédé de fabrication selon l'une des revendications précédentes, dans lequel le corps (2) en électrocéramique est doté avant l'application de la métallisation (3; 4) au moins en partie d'une couche non conductrice de passivation (7), **caractérisé en ce que** la partie de surface (5; 6) est irradiée par la lumière laser (L) avant l'application de la métallisation (3; 4) pour arracher les parties de la couche de passivation (7) présentes sur la partie de surface (5; 6).

13. Procédé de fabrication selon l'une des revendications précédentes, **caractérisé en ce que** le composant électrocéramique (1) est un varistor (1), un composant supraconducteur à haute température, un composant piézocéramique, un condensateur en céramique, un conducteur de chaleur ou de froid, une résistance céramique ou un détecteur de gaz en céramique.

14. Procédé de fabrication selon l'une des revendications précédentes, **caractérisé en ce que** le composant électrocéramique (1) est un varistor (1) et le corps (2) en électrocéramique est un corps (2) de varistor et **en ce que** le corps (2) de varistor est une céramique frittée et dopée (2) en oxyde métallique, de préférence à base de ZnO, SnO₂, SrTiO₃ ou TiO₂, ou une céramique de carbure dopé.

15. Procédé de fabrication selon l'une des revendications précédentes, **caractérisé en ce que** le composant électrocéramique (1) est un varistor (1) et le corps (2) en électrocéramique est un corps (3; 4), la partie de surface (5; 6) est irradiée par la lumière laser (L) pour diminuer la dépendance de la conductivité transversale de la partie de surface (5; 6) vis-à-vis de la tension électrique, et en particulier **en ce que** la partie de surface (5; 6) est irradiée par la lumière laser (L) avant l'application de la couche de métallisation (3; 4) pour obtenir une dépendance ohmique de la conductivité transversale de la partie de surface (5; 6) vis-à-vis de la tension électrique.

16. Procédé de fabrication selon l'une des revendications précédentes, **caractérisé en ce que** le corps (2) en électrocéramique est essentiellement en forme de cylindre, de disque ou de plaque, une partie de surface (5; 6) étant disposée sur les deux surfaces mutuellement parallèles qui délimitent le cylindre, le disque ou la plaque et une métallisation (3; 4) est appliquée par pulvérisation thermique sur ses deux parties de surface (5; 6), ou le corps (2) en électrocéramique est de forme essentiellement tubulaire ou cylindrique, une métallisation (3; 4) étant appliquée par pulvérisation thermique sur deux parties de surface (5; 6) situées à distance mutuelle dans la direction axiale, essentiellement annulaires et disposées sur la surface d'enveloppe extérieure (8) du tube ou du cylindre.

17. Utilisation d'une irradiation par laser (L) pour enlever de la matière à titre de prétraitement en vue de l'application d'une métallisation (3; 4) sur une électrocéramique (2) et en particulier sur une céramique (2) de varistor.

18. Composant électrocéramique (1), **caractérisé en ce que** le composant électrocéramique (1) est fabriqué par le procédé de fabrication selon l'une des revendications 1 à 16.

19. Composant électrocéramique (1) selon la revendication 18, **caractérisé en ce que** le composant électrocéramique (1) est un varistor (1).

20. Composant électrocéramique (1) selon les revendications 18 ou 19, **caractérisé en ce qu'**une partie de surface (5; 6) du composant électrocéramique (1) présente une diminution des ondulations de la partie de surface (5; 6) obtenue par irradiation par un faisceau laser focalisé.

21. Composant électrocéramique (1) selon la revendication 19, **caractérisé en ce qu'**après l'irradiation par laser, la conductivité transversale du composant électrocéramique (1) présente une caractéristique essentiellement ohmique
